# EUROPEAN PATENT APPLICATION

(11) **EP 2 741 088 A1**
(43) Date of publication of application: **11.06.2014**
(21) Application number: 12195830.0
(22) Date of filing: 06.12.2012
(51) Int. Cl.: G01P 15/12, G01P 15/18

(54) **High performance tri-axial piezoresistive accelerometer**

(71) Applicant: Njuguna, James, Cranfield Bedfordshire MK43 0AL (GB)
(72) Inventor: Njuguna, James, Cranfield, Bedfordshire MK43 0AL (GB); Messina, Marco, Cranfield, MK43 0SZ (GB)

(57) **Abstract**

The invention is on a bulk-micromachining tri-axial piezoresistive accelerometer characterised by highly symmetric mechanical structure with four surrounding beams. New mechanical structure (figure 3) and measurement circuit (figure 4) have been developed, respect to prior state-of-art technology, which maximize sensor measurement accuracy. The combination of both novelty allows increasing the device sensitivity and simultaneously reducing the total cross-axis sensitivity (<0.4%), hence improving the measurement accuracy of current state-of-art technology of similar devices. Moreover the sensitivity remains constant for any in-plane acceleration (acceleration on X-Y plane, uniaxial or biaxial), therefore improving the static device response.

The benefits of the invention are independent from the device size features, therefore the invention can be used for designing accelerometer for various purposes.

## Description

The invention relate to a sensor detecting acceleration. The sensor is a bulk-micromachining tri-axial piezoresistive accelerometer that comprises three main elements: sensing element (piezoresistors), micro-mechanical structure (beams and proof mass) and measurement circuit.

In the prior art, highly-symmetric mechanical structure geometry with four surrounding beams (Figure 1) have square proof mass and Wheatstone bridges with 16 piezoresistors (Figure 2) as follows:

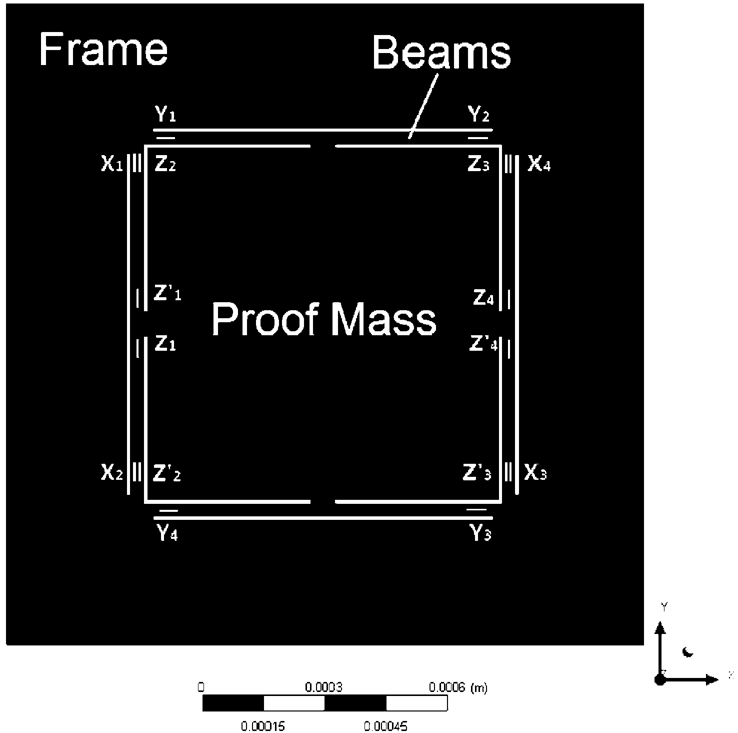

**Figure 1. Prior art. Mechanical structure with 16 piezoresistors (top view).**

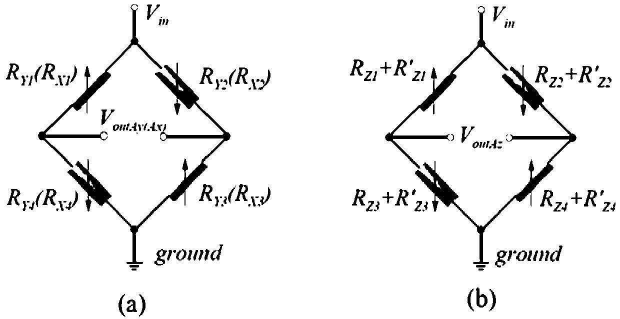

**Figure 2. Prior art. (a) X, Y-axis Wheatstone bridge; (b) Z-axis Wheatstone bridge**

The prior art is available at: D. V. Dao, S. Okada, V. T. Dau, T. Toriyama and S. Sugiyama, "Development of a 3-DOF Silicon Piezoresistive Micro Accelerometer," Proc. of the 2004 Int. Symp. on Micro -Nanomechatronics and Human Science, 2004 and The Fourt Symp. Micro-Nanomechatronics for Information-Based Society, (2004).

Prior art presents low sensitivity and high cross-sensitivity (5%) that limit the measurement accuracy.

The invention is on the micro-mechanical structure and measurement circuit. Both elements have been specifically designed to maximize sensor measurement accuracy with respect to the current state-of-art-technology.

The invention comprises new highly symmetric mechanical structure (Figure 3) and new Wheatstone bridges measurement circuit (Figure 4) as follows:

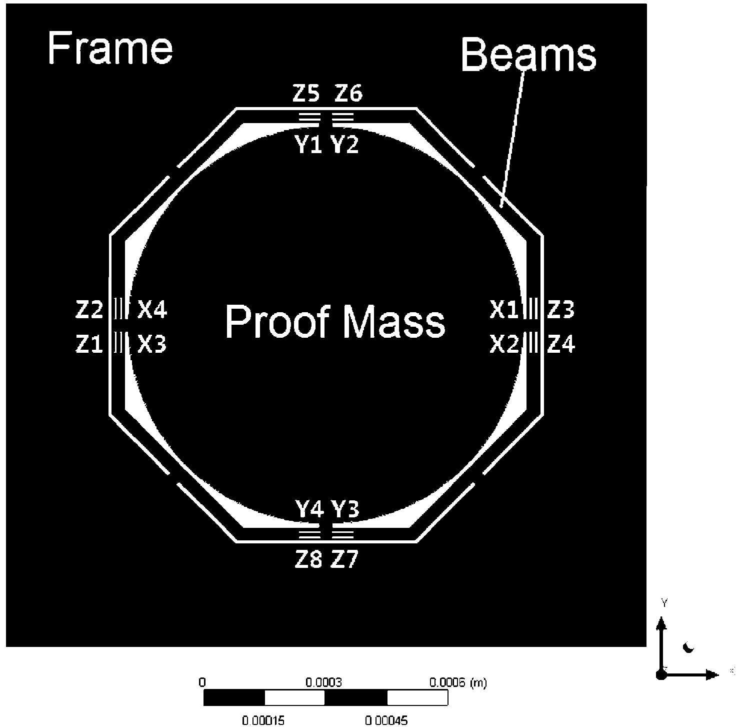

**Figure 3. Invention. Mechanical structure with 16 piezoresistors (top view)**

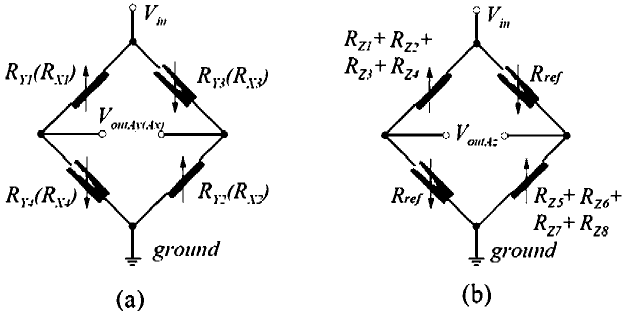

**Figure 4. Invention. (a) X, Y-axis Wheatstone bridge; (b) Z-axis**

### Wheatstone bridge

In Figure 3, the new device is characterised by a free standing proof mass of circular geometry, suspended by 4 surrounding beams of octagonal shape. The 16 piezoresistors forming 3 full Wheatstone bridges, one for each axis, are located at the beams edges, where the beams connect to the proof mass.

In Figure 4, the new measurement circuit is presented. X-axis and Y-axis bridges are formed by X1, X2, X3, X4 and Y1, Y2, Y3, Y4 piezoresistors respectively, Z-axis bridge is formed by Z1, Z2, Z3, Z4, Z5, Z6, Z7, Z8 piezoresistors and 2 resistors (R_{ref}).

The proposed invention significantly increases measurement accuracy by reducing the cross-talk while increasing the sensitivity as compared to similar state-of-the art technology. Moreover the invention keeps the sensitivity for in-plane acceleration uniform, and therefore increasing measurement accuracy.

The novelty of the device based on piezoresistive effect is the new shape of the micro-mechanical structure and its measurement circuit. The combination of both allows, for the first time, to significantly increase the sensitivity and while simultaneously reducing the total cross-axis sensitivity (<0.4%), hence improving the measurement accuracy of current state-of -art technology devices. Moreover the sensitivity remains constant for any in-plane acceleration (acceleration on X-Y plane).

Since the novelty is on the shape and measurement circuit of a bulk micromachining piezoresistive accelerometer, this new device is superior and will replace the existing medium/high-g devices with similar device target applications. In the low-g range, the new device will compete with up to date capacitive devices in terms of resolution and sensitivity.

The benefits of the invention are independent from the device size features, therefore the invention can be used for designing accelerometer for various purposes.

## Claims

1. The sensor device to measure acceleration comprises three elements: sensing elements, mechanical structure and measurement circuit.

2. Device as in Claim 1, **characterised in that** said mechanical structure comprises beams, proof mass and frame.

3. Device as in Claim 1, **characterised in that** said mechanical structure is highly symmetric.

4. Device as in Claim 1, **characterised in that** said sensing elements are piezoresistors.

5. Device as in Claim 1, **characterised in that** said measurement circuit comprises three circuits, one for each axis of measurement.

6. Device as Claim 2, **characterised in that** said beams are four in number.

7. Device as Clam 2, **characterised in that** said beams are octagonal in shape.

8. Device as Claim 2, **characterised in that** said beams are surrounding the proof mass.

9. Device as Claim 2, **characterised in that** said beams are connected to the proof mass at 0°, 90°, 180° and 270°.

10. Device as Claim 3, **characterised in that** said beams are connected to the frame at 45°, 135°, 225° and 315°.

11. Device as Claim 2, **characterised in that** said proof mass is cylindrical in shape.

12. Device as Claim 2, **characterised in that** said proof mass is free standing.

13. Device as Claim 4 and 9, is **characterised in that** said piezoresistors are located at the edges of the beams connecting to the proof mass.

14. Device as in Claim 1 and 5, **characterised in that** said circuits are made up of Wheatstone bridges.

15. Device as Claim 14, **characterised in that** said Wheatstone bridge for measuring X-axis acceleration is formed by 4 piezoresistors.

16. Device as Claim 14, **characterised in that** said Wheatstone bridge for measuring Y-axis acceleration is formed by 4 piezoresistors.

17. Device as Claim 14, **Characterised in that** said Wheatstone bridge for measuring Z-axis acceleration is formed by 8 piezoresistors and 2 resistors.

18. Device as Claim 15, **characterised in that** said 4 piezoresistors for measuring X-axis acceleration are X1, X2, X3 and X4.

19. Device as claim 16, **characterised in that** said 4 piezoresistors for measuring Y-axis acceleration are Y1, Y2, Y3 and Y4.

20. Device as Claim 17, **characterised in that** said 8 piezoresistors and 2 resistors for measuring the Z-axis acceleration are Z1, Z2, Z3, Z4, Z4, Z,5 Z6, Z7, Z8 and R_{ref} respectively.
